# EUROPÄISCHE PATENTANMELDUNG

(11) **EP 3 360 825 A1**
(43) Veröffentlichungstag der Anmeldung: **15.08.2018**
(21) Anmeldenummer: 18154876.9
(22) Anmeldetag: 02.02.2018
(51) Int. Cl.: B65G 1/04

(54) **REGALBEDIENVORRICHTUNG MIT BEWEGLICHEN BODENTEILEN UND VERFAHREN ZUM ENTNEHMEN EINER WARENEINHEIT AUS EINEM WARENREGAL**

(30) Priorität: 14.02.2017 DE 102017102862
(71) Anmelder: MC Creativ Werbeagentur GmbH, 73249 Wernau (DE)
(72) Erfinder: Lang, Hartmut, 73249 Wernau (DE); Lang, Tobias H., 72622 Nürtingen (DE)
(74) Vertreter: Rüger, Barthelt & Abel

(57) **Zusammenfassung**

Regalbedienvorrichtung (20) mit einem Warenregal (21), das mehrere Regalfächer (22) aufweist, wobei sich in jedem Regalfach (22) ein Facheinschub (25) mit einem oder mehreren Fächern (29) befindet. Eine Antriebsanordnung (33) dient zum Bewegen einer Transportvorrichtung (32) entlang einer Vorderseite (34) des Warenregals (21) und kann die Transportvorrichtung (32) vor einem Regalfach (22) positionieren, um den Facheinschub (25) aus dem Regalfach (22) auf einen Transportboden (39) der Transportvorrichtung (32) zu bewegen. An einer Entladestation (58) kann der Transportboden (39) unterhalb des wenigstens einen Faches (29) des Facheinschubs (25) geöffnet werden, so dass eine in dem Fach (29) angeordnete Wareneinheit (W) durch die Öffnung im Transportboden (39) nach unten in einen Ausgabeschacht fällt. Der Transportboden (39) ist hierfür mittels mehrerer Transportbodenteile (45) unterteilt, die einzeln bewegt werden können. Hierzu ist an der Entladestation (58) ein Bodenbedienteil (59) vorhanden, das über einen Entladeantrieb (60) betätigt wird.

## Beschreibung

Die Erfindung betrifft eine Regalbedienvorrichtung mit einem Warenregal sowie ein Verfahren zum Entnehmen einer Wareneinheit aus dem Warenregal.

Eine Regalbedienvorrichtung und ein Verfahren zum Entnehmen einer Wareneinheit bzw. Packung aus dem Regal ist beispielsweise aus DE 10 2011 002 322 A1 bekannt. Dort wird eine Transportvorrichtung mittels einer Antriebseinrichtung entlang einer Vorderseite des Regals bewegt und kann vor einem entsprechenden Regalfach positioniert werden. Im Regalfach sind Packungen in einer Reihe hintereinander angeordnet. Die Transportvorrichtung hat eine Entnahmeeinrichtung, mittels der eine Reihe von Packungen zur Transportvorrichtung hin geschoben werden kann. Wenn beispielsweise die vorderste Packung entnommen werden soll, wird die gesamte Reihe soweit verschoben, dass die vorderste Packung über die Vorderkante des Regalfaches auf einem Transportboden der Transportvorrichtung gelangt. Soll eine der mittleren Packungen in einer Reihe entnommen werden, müssen die davor angeordneten Packungen ebenfalls auf dem Transportboden bewegt werden. Anschließend wird die Transportvorrichtung um 180 Grad gedreht und die Packungen zurück in das Regalfach geschoben, die nicht aus dem Regalfach entnommen werden sollen.

Eine solche Transportvorrichtung ist relativ aufwendig und benötigt in jeder Position vor einem Regalfach ausreichend Raum, um eine Drehbewegung um ihre Hochachse ausführen zu können. Außerdem benötigt die Entnahme einer Packung aus der Mitte einer Reihe relativ viel Zeit.

Ausgehend von diesem Stand der Technik kann es als Aufgabe der vorliegenden Erfindung angesehen werden, eine Regalbedienvorrichtung zu schaffen, bei der das Entnehmen einer beliebigen Packung bzw. Wareneinheit in kurzer Zeit auf einfache Weise ermöglicht ist.

Diese Aufgabe wird mit einer Regalbedienvorrichtung nach Patentanspruch 1 und mit einem Verfahren nach Patentanspruch 15 gelöst.

Zu der Regalbedienvorrichtung gehört ein Warenregal mit mehreren Regalfächern, die dazu eingerichtet sind, jeweils einen Facheinschub mit wenigstens einem nach unten offenen Fach aufzunehmen. In jedem Fach eines Facheinschubs kann eine Wareneinheit angeordnet werden. Eine Wareneinheit kann aus einer oder mehreren einzelnen Packungen bestehen, die gemeinsam entnommen werden sollen.

Die Regalbedienvorrichtung hat eine Transportvorrichtung, die mittels einer Antriebsanordnung in wenigstens zwei und vorzugsweise genau zwei Raumrichtungen bewegbar ist. Vorzugsweise kann die Antriebsanordnung die Transportvorrichtung in einer Höhenrichtung und einer Seitenrichtung entlang einer Vorderseite des Warenregals bewegen und vor jedem der vorhandenen Regalfächer positionieren. Die Antriebsanordnung ist vorzugsweise dazu eingerichtet, die Transportvorrichtung ausschließlich in zwei translatorischen Freiheitsgraden zu bewegen. Weitere Antriebe für zusätzliche Freiheitsgrade sind nicht erforderlich. Die Antriebsanordnung kann beispielsweise durch eine X-Y-Schlittenantriebsanordnung gebildet sein. Die Höhenrichtung kann der Vertikalrichtung entsprechen und die Seitenrichtung kann einer horizontalen Richtung entsprechen.

Die Transportvorrichtung ist zur Entnahme der Facheinschübe aus den Regalfächern eingerichtet. Sie hat einen Transportboden, auf dem ein entnommener Facheinschub für den Transport zu einer Entladestation angeordnet bzw. abgestellt werden kann. Der Transportboden weist mehrere separat bewegbare Transportbodenteile auf. Die Transportbodenteile können beispielsweise durch verschiebbar an der Transportvorrichtung gelagerte Platten gebildet sein.

Die Entladestation ist dazu eingerichtet, ein oder mehrere Transportbodenteile zu bewegen. Dadurch kann in dem Transportboden eine Öffnung geschaffen werden. Der Transportboden kann im Bereich unterhalb des darauf angeordneten Facheinschubs bzw. unterhalb des wenigstens einen Faches des Facheinschubs wahlweise ganz oder teilweise geöffnet werden. Dadurch kann die in dem betreffenden Fach vorhandene Wareneinheit durch die Öffnung im Transportboden nach unten fallen und auf diese Weise entnommen werden. Abhängig davon, welche der Wareneinheiten entnommen werden soll, wird der Transportboden durch Bewegen und insbesondere Verschieben des einen oder den mehreren Transportbodenteile an der richtigen Stelle geöffnet und die gewünschte Wareneinheit wird aus dem Facheinschub entnommen. Die Wareneinheit kann beispielsweise an der Entladestation in ein Ausgabefach fallen. Der Facheinschub mit den gegebenenfalls noch darin vorhandenen Wareneinheiten kann wieder zurück zum Regalfach transportiert und dort wieder in das Regalfach eingesetzt werden.

Die Transportbodenteile sind ohne eigenen Antrieb in der Transportvorrichtung angeordnet. Ihre Bewegung erfolgt durch eine entsprechende Bedieneinrichtung der Entladestation. Auch das Warenregal selbst ist antriebslos ausgeführt. Rotative Achsantriebe zur Drehung der Transportvorrichtung oder dergleichen sind nicht erforderlich. Sämtliche Bewegungen werden vorzugsweise durch translatorische bzw. lineare Antriebe ausgeführt. Bei einem Ausführungsbeispiel ist es ausreichend, wenn abgesehen von den zwei linearen bzw. translatorischen Antrieben der Antriebsanordnung ein translatorischer Antrieb an der Transportvorrichtung zum Entnehmen und/oder Einsetzen eines Facheinschubs aus bzw. in ein Regalfach und ein weiterer Linearantrieb an der Entladestation vorhanden ist. Die Anzahl der benötigten Antriebe ist gering. Die Regalbedienvorrichtung lässt sich mit einfachen Mitteln ohne komplexe Antriebe ausführen. Die Zeit, um eine beliebige Wareneinheit aus dem Warenregal zu entnehmen und an der Entladestation zu entladen, ist gering. Unabhängig von der Anordnungsreihenfolge in einem Regalfach bzw. einem Facheinschub, können beliebige Wareneinheiten auf einfache Weise entnommen werden.

Es ist bevorzugt, wenn die Entladestation an einer beim Betrieb unveränderlichen Entladestelle neben oder am Warenregal angeordnet ist. Die Antriebsanordnung ist dazu eingerichtet, die Transportvorrichtung in eine Entladeposition an der Entladestation zu bewegen.

Bei einem Ausführungsbeispiel hat das Warenregal eine Vorderseite, die sich in einer Ebene erstreckt, die durch eine Höhenrichtung und einer rechtwinklig dazu ausgerichtete Seitenrichtung aufgespannt ist. Ausgehend von dieser Vorderseite erstrecken sich die Regalfächer in einer Tiefenrichtung, die beispielsgemäß rechtwinklig zur Höhenrichtung und zur Seitenrichtung ausgerichtet ist, zu einer Rückseite des Warenregals hin. Die Transportvorrichtung ist über die Antriebsanordnung entlang der Vorderseite bewegbar. Die Rückseite des Warenregals kann zugänglich oder unzugänglich ausgeführt sein. Wenn die Rückseite des Warenregals zugänglich ist, kann das Bestücken der einzelnen Regalfächer über die Rückseite und optional über eine weitere Transportvorrichtung erfolgen, die analog zur hier beschriebenen Transportvorrichtung ausgeführt sein und bewegt werden kann.

Es ist außerdem bevorzugt, wenn ein Facheinschub in Tiefenrichtung durch wenigstens eine Fachzwischenwand in einzelne Fächer unterteilbar ist. Die Fachzwischenwand kann an vorgegebenen regelmäßig beabstandeten Stellen in den Facheinschub eingesetzt werden, so dass die Fächer in Tiefenrichtung eine Abmessung entsprechend einem Rastermaß aufweisen. Die Tiefe eines Fachs entspricht bei bevorzugten Ausführungsformen der Abmessung eines Transportbodenteils in Tiefenrichtung oder einem ganzzahligen Vielfachen von der Abmessung des Transportbodenteils in Tiefenrichtung. Die Anzahl der möglichen Fächer in einem Facheinschub entspricht vorzugsweise der Anzahl der vorhandenen Transportbodenteile.

Bei einem Ausführungsbeispiel sind die Transportbodenteile mittels einer an der Transportvorrichtung vorhandenen Bodenführungseinrichtung in Tiefenrichtung verschiebbar gelagert. Sie können sich in Tiefenrichtung unmittelbar aneinander anschließen bzw. aneinander anstoßen.

Bei einem Ausführungsbeispiel kann die Bodenführungseinrichtung zwei parallele Bodenführungsschienen aufweisen, die sich insbesondere in Tiefenrichtung erstrecken. An einer dem Warenregal abgewandten Seite der Transportvorrichtung sind die Bodenführungsschienen vorzugsweise mittels eines feststehenden Bodenelements oder Querstücks verbunden, dass einen feststehenden Anschlag für die beweglichen Transportbodenteile bildet. Auf dem feststehenden Bodenelement und/oder den Bodenführungsschienen kann sich ein Facheinschub beim Transport auf dem Transportboden abstützen.

Auf der dem Warenregal zugewandten Seite der Transportvorrichtung kann die Bodenführungseinrichtung zum Einführen und Herausnehmen von einem oder mehreren Transportbodenteilen eingerichtet sein. Beispielsweise können die Bodenführungsschienen auf dieser Seite offen sein. Somit kann in der Entladestation durch Bewegen von einem oder mehreren Transportbodenteilen aus der Bodenführungseinrichtung der Transportvorrichtung heraus eine Öffnung zur Entnahme der betreffenden Wareneinheit oder Wareneinheiten geschaffen werden.

Auf der dem Warenregal zugewandten Seite der Transportvorrichtung kann außerdem eine Sicherungseinrichtung vorhanden sein, um ein versehentliches Entnehmen bzw. Herausrutschen eines Transportbodenteils zu vermeiden. Die Sicherungseinrichtung kann zwischen einer das Herausnehmen eines Transportbodenteils verhindernden Sicherungsstellung und einer das Herausnehmen eines oder mehrerer Transportbodenteile ermöglichenden Freigabestellung bewegbar bzw. umschaltbar sein. Die Sicherungseinrichtung kann an dem vordersten Transportbodenteil vorhanden sein, das unmittelbar angrenzend an die Seite der Transportvorrichtung angeordnet ist, die dem Warenregal zugewandt ist.

Es ist bevorzugt, wenn die Entladestation ein Sicherungsbedienelement aufweist. Das Sicherungsbedienelement ist dazu eingerichtet, die Sicherungseinrichtung in die Freigabestellung zu bewegen, wenn sich die Transportvorrichtung in einer Entladeposition an der Entladestation befindet. Es ist bevorzugt, wenn das Umschalten der Sicherungseinrichtung in die Freigabestellung automatisch dadurch erfolgt, dass die Antriebsanordnung die Transportvorrichtung in die Entladeposition bringt.

Vorteilhafterweise weist die Entladestation ein mittels eines Entladeantriebs bewegbares Bodenbedienteil auf. Das Bodenbedienteil ist vorzugsweise nur in einer Ebene bzw. nur in einem translatorischen Freiheitsgrad bewegbar. Das Bodenbedienteil ist dazu eingerichtet, an wenigstens einem der Transportbodenteile anzugreifen und das wenigstens eine Transportbodenteil in Tiefenrichtung zu verschieben.

Es ist bevorzugt, wenn jedes Transportbodenteil einen rechtwinklig oder schräg zu der Tiefenrichtung wegragenden Bedienvorsprung aufweist. Beispielsweise kann der Bedienvorsprung in Höhenrichtung wegragen. Er kann durch einen Bedienzapfen gebildet sein. Im Bodenbedienteil ist vorzugsweise wenigstens eine korrespondierende Bedienaussparung vorhanden, die dazu eingerichtet ist, den Bedienvorsprung zumindest teilweise zu umgreifen oder an dem Bedienvorsprung anzugreifen. Durch das Bewegen des Bodenbedienteils der Entladestation kann dann gemeinsam mit dem Bodenbedienteil das betreffende Transportbodenteil oder die betreffenden Transportbodenteile bewegt werden, um eine Öffnung im Transportboden zu schaffen bzw. wieder zu verschließen.

Bei dem Ausführungsbeispiel kann das Bodenbedienteil als Bedienplatte ausgeführt sein. Beispielsweise können in der Bedienplatte mehrere z.B. durch Löcher gebildete Bedienaussparungen für die Bedienvorsprünge vorhanden sein.

Die Entladestation weist vorzugsweise eine Abstützeinrichtung auf, die dazu eingerichtet ist, ein aus der Bodenführungseinrichtung an der Entladestation entnommenes Transportbodenteil abzustützen. Die Abstützeinrichtung kann durch eine entsprechend der Bodenführungseinrichtung ausgestaltete Führung ausgebildet sein. Alternativ oder zusätzlich kann auch die Bedienplatte Bestandteil der Abstützeinrichtung sein.

Die Transportvorrichtung weist vorzugsweise eine Fachbedieneinrichtung auf, die dazu eingerichtet ist, einen Facheinschub von dem Transportboden in ein Regalfach zu schieben oder zu ziehen und/oder einen Facheinschub aus einem Regalfach auf dem Transportboden zu schieben oder zu ziehen. Dazu kann die Fachbedieneinrichtung beispielsweise ein in Tiefenrichtung bewegbares Fachbedienelement aufweisen. Das Fachbedienelement greift vorzugsweise in eine Fachbedienaussparung eines betreffenden Facheinschubs ein, um diesen in Tiefenrichtung zu bewegen. Das Einführen des Fachbedienelements in die Fachbedienaussparung kann vorzugsweise mittels der Antriebsanordnung in eine Richtung quer zur Tiefenrichtung erfolgen.

Zum Entnehmen einer Wareneinheit aus einem Warenregal wird wie folgt vorgegangen:
Die Transportvorrichtung wird mittels der Antriebsanordnung in eine Position vor dem betreffenden Regalfach bewegt. Der Facheinschub aus dem Regalfach wird entnommen und auf dem Transportboden der Transportvorrichtung angeordnet. Anschließend wird die Transportvorrichtung in eine Entladeposition an der Entladestation bewegt. Die Entladestation bewegt bzw. verschiebt ein oder mehrere Transportbodenteile, so dass sich der Transportboden unterhalb des wenigstens einen Faches des in der Transportvorrichtung vorhandenen Facheinschubs ganz oder teilweise öffnet. Durch die entstehende Öffnung im Transportboden kann sich das wenigstens eine Fach entleeren und die dort angeordnete Wareneinheit an der Entladestation herausfallen, beispielsweise in ein Ausgabefach, einen Ausgabeschacht oder dergleichen. Abhängig davon, welche Transportbodenteile verschoben werden, können gezielt bestimmte Fächer des Facheinschubs geöffnet und auf diese Weise die jeweilige Wareneinheit entnommen werden. Ein Umsortieren der Wareneinheiten bzw. Zwischenlagern nicht zu entnehmender Wareneinheiten in dem Facheinschub ist nicht notwendig. Nach dem Entnehmen der Wareneinheit an der Entladestation kann der Facheinschub mit den restlichen Wareneinheiten oder gegebenenfalls in leeren Zustand wieder zurück in das zugehörige Regalfach transportiert werden.

Vorteilhafte Ausgestaltungen der Erfindung ergeben sich aus den abhängigen Patentansprüchen, der Beschreibung sowie den Zeichnungen. Nachfolgend werden bevorzugte Ausführungsbeispiele der Erfindung anhand der beigefügten Zeichnungen im Einzelnen erläutert. Es zeigen:
Figur 1 Ein Ausführungsbeispiel einer Regalbedienvorrichtung in einer perspektivischen Darstellung mit Blick schräg auf eine Vorderseite eines Warenregals,
Figur 2 die Regalbedienvorrichtung aus Figur 1 in einer anderen perspektivischen Darstellung mit Blick schräg auf eine Rückseite des Warenregals,
Figur 3 beispielhafte Ausführungsformen von Facheinschüben für Regalfächer des Warenregals aus den Figuren 1 und 2 in perspektivischer Darstellung,
Figur 4 eine Teildarstellung des Warenregals mit Blick schräg auf die Vorderseite,
Figur 5 eine perspektivische Teildarstellung der Transportvorrichtung mit einem Ausführungsbeispiel einer Fachbedieneinrichtung,
Figur 6 eine perspektivische Teildarstellung der Transportvorrichtung mit einem Facheinschub in der Entladeposition,
Figur 7 eine perspektivische Teildarstellung der Regalbedienvorrichtung, die insbesondere die Entladestation sowie die Transportvorrichtung vor dem Erreichen der Entladeposition zeigt,
Figur 8 die perspektivische Teildarstellung der Regalbedienvorrichtung aus Figur 7, wobei sich ein Bodenbedienteil der Entladestation in einer ausgefahrenen Stellung befindet,
Figur 9 eine weitere perspektivische Teildarstellung der Regalbedienvorrichtung, die die Transportvorrichtung und die Entladestation in dem Zustand gemäß Figur 8 veranschaulicht,
Figur 10 eine perspektivische Teildarstellung der Regalbedienvorrichtung, mit sich in einer Entladeposition befindender Transportvorrichtung bei vollständig geschlossenem Transportboden,
Figur 11 die perspektivische Darstellung gemäß Figur 10, wobei das Bodenbedienteil zur Herstellung einer Öffnung in dem Transportboden teilweise eingefahren wurde und eine Wareneinheit aus dem Facheinschub herausfällt,
Figur 12 eine perspektivische Darstellung der Transportvorrichtung und der Entladestation analog zur Figur 11, wobei der Transportboden unterhalb eines mittleren Fachs eines Facheinschubs durch die Entladestation geöffnet wurde und
Figur 13 eine stark schematisierte teilgeschnittene Prinzipdarstellung einer Sicherungseinrichtung in einer Sicherungsstellung und
Figur 14 die Sicherungseinrichtung aus Figur 13 in einer Freigabestellung.

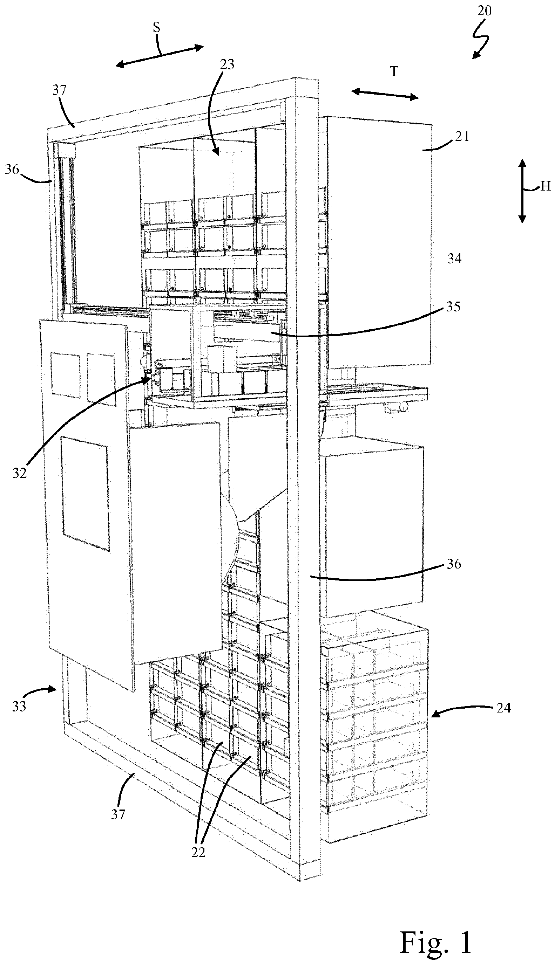

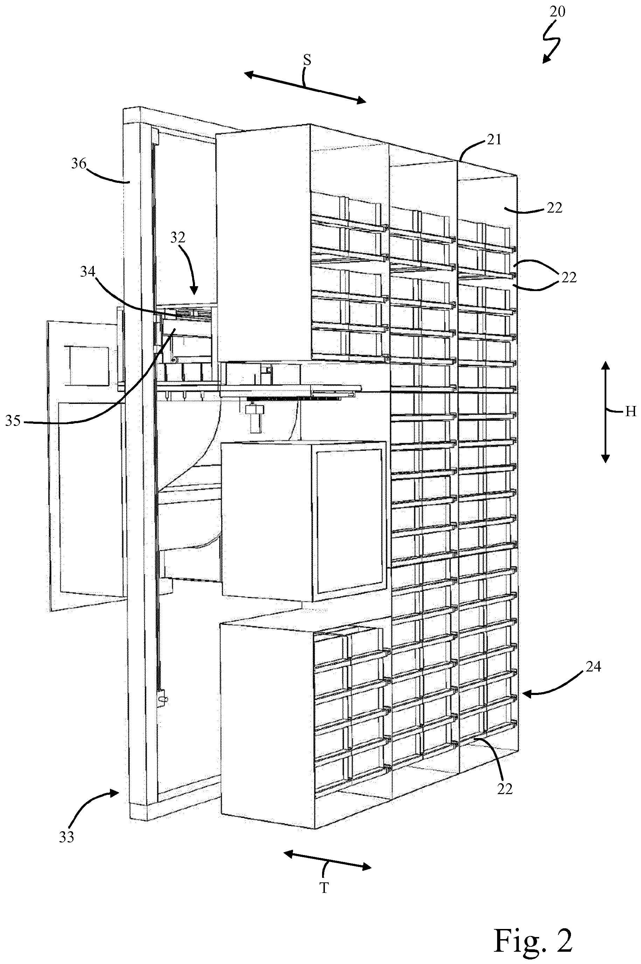

In den Figuren 1 und 2 ist ein Ausführungsbeispiel einer Regalbedienvorrichtung 20 veranschaulicht. Zu der Regalbedienvorrichtung 20 gehört ein Warenregal 21 mit einer Mehrzahl von Regalfächern 22. Die Regalfächer 22 sind matrixförmig angeordnet. Das Warenregal 21 hat eine Vorderseite 23 und eine der Vorderseite entgegengesetzte Rückseite 24. Die Vorderseite 23 und die Rückseite 24 erstrecken sich vorzugsweise parallel zueinander und zu einer Ebene, die durch eine Höhenrichtung H und eine Seitenrichtung S aufgespannt ist. Die Höhenrichtung H ist vorzugsweise vertikal orientiert und die Seitenrichtung S ist vorzugsweise horizontal orientiert. Jedes Regalfach 22 hat eine Tiefe zwischen der Vorderseite 23 und der Rückseite 24. Eine Tiefenrichtung T ist beispielsgemäß rechtwinklig zur Höhenrichtung H und zur Seitenrichtung S ausgerichtet.

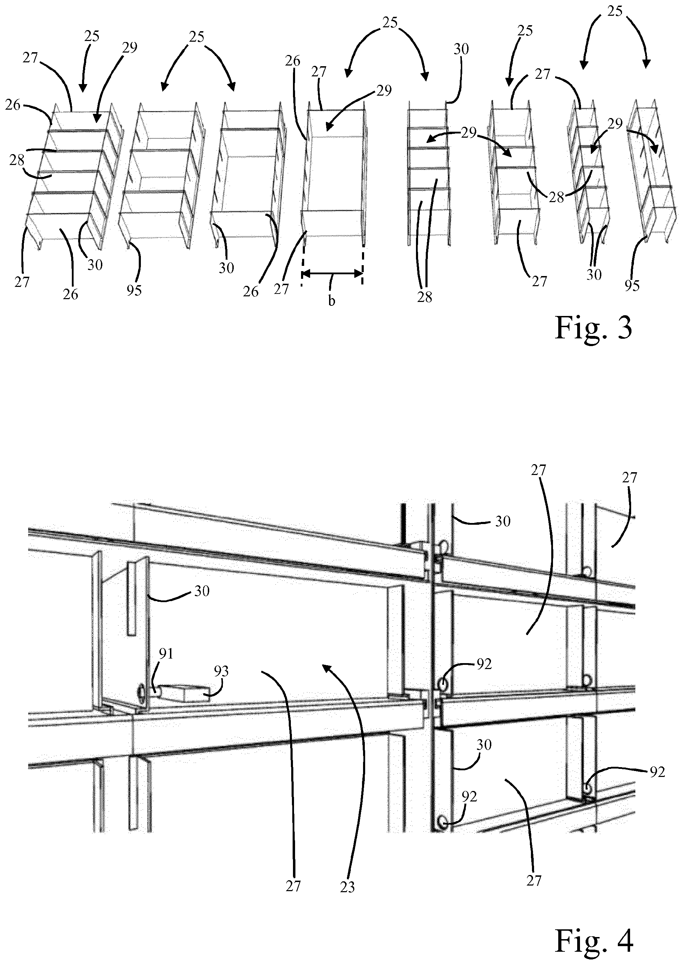

Jedes Regalfach 22 ist zur Aufnahme eines Facheinschubs 25 eingerichtet. Jedes Regalfach kann durch Regalböden bzw. durch Regalwände von den benachbarten Regalfächern 22 getrennt sein. Es ist auch möglich, dass die Regalböden und die Regalwände des Warenregals 21 so miteinander verbunden sind, dass die Regalfächer 22 teilweise zueinander offen sind. Jedes Regalfach 22 hat ein Aufnahmemittel für jeweils einen Facheinschub 25. Ausführungsbeispiele von Facheinschüben 25 sind in Figur 3 veranschaulicht. Jeder Facheinschub hat zwei parallel zueinander ausgerichtete Längswände 26, die in Seitenrichtung S unter Bildung einer Breite b des Facheinschubs mit Abstand zueinander angeordnet sind. Die beiden Längswände 26 sind durch zwei Querwände 27 zur Bildung eines Rahmens miteinander verbunden. Die beiden Querwände 27 haben in Tiefenrichtung T einen Abstand, der etwas geringer ist als die Tiefe der Regalfächer 22 bzw. des Wandregals 21. Der Abstand zwischen den beiden Querwänden 27 ist unterteilt, vorzugsweise in ein regelmäßiges Raster, wobei entsprechend dem Rastermaß Schlitze oder andere Anbringungsmittel an den Längswänden 26 vorhanden sein können, um jeweils eine Zwischenwand 28 zwischen den beiden Längswänden 26 im Abstand zu den Querwänden 27 anzuordnen. Auf diese Weise kann der durch die Längswände 26 und die Querwände 27 gebildete Rahmen zur Bildung von mehreren Fächern 29 unterteilt werden. Bei dem hier beschriebenen Ausführungsbeispiel können bis zu vier Zwischenwände 28 zwischen die Querwände 27 eingesetzt werden. Abhängig von der gewünschten Tiefe der Fächer und der Dimensionierung der Facheinschübe 25 bzw. des Wandregals 21 kann die Anzahl der möglichen Zwischenwände 26 pro Facheinschub 25 auch größer oder kleiner sein. In jedem der Fächer 29 kann eine Wareneinheit W angeordnet werden, wobei eine Wareneinheit W aus einer einzigen oder mehreren einzelnen Packungen mit oder ohne Umverpackung bestehen kann. Die Waren einer Wareneinheit W können Arzneimittel und/oder Drogerieartikel oder beliebige andere Waren oder Stückgüter sein.

Die Höhen der Facheinschübe 25 in den unterschiedlichen Ausführungen (Figur 3) können gleich oder unterschiedlich groß sein. Wie es in Figur 3 schematisch veranschaulicht ist, kann auch die Breite b der Facheinschübe 25 variiert werden. Auch hierfür kann beispielsweise ein Rastermaß vorgegeben sein, so dass ausgehend von einer Mindestbreite auch ganzzahlige Vielfache der Mindestbreite gewählt werden können.

In Figur 3 ist ebenfalls zu erkennen, dass die beiden Längswände 27 in Tiefenrichtung T über die beiden Querwände mit jeweils einem Wandendbereich 30 hinausragen. Wenigstens einer dieser Wandendbereiche 30 kann dazu eingerichtet sein, um mit einer Fachbedieneinrichtung 31 einer Transportvorrichtung 32 zusammen zu arbeiten, wenn der Facheinschub 25 in Tiefenrichtung T bewegt werden soll.

Die Zwischenwände 28 können als Doppelwand oder mit einer entsprechenden Dicke ausgeführt sein, so dass die gebildeten Fächer 29 in Tiefenrichtung T einen ausreichend großen Zwischenabstand aufweisen, der als Spiel oder Toleranz beim Erzeugen einer Öffnung unterhalb eines Faches 29 dient, was später im Einzelnen erläutert wird.

Die Transportvorrichtung 32 ist mittels einer Antriebsanordnung 33 entlang der Vorderseite 23 des Warenregals 21 bewegbar und kann vor jedem der Regalfächer 22 positioniert werden. Die Antriebsanordnung 33 ist dazu eingerichtet, die Transportvorrichtung 32 in einer Ebene parallel zur Vorderseite 23 zu bewegen und weist hierfür zwei Schlittenantriebe auf. Zum ersten Schlittenantrieb gehört ein erster Schlitten 34, der entlang einer Traverse 35 verschiebbar geführt gelagert ist und über einen zugeordneten Antrieb entlang der Traverse 35 verschoben werden kann. Die Traverse 35 erstreckt sich in Seitenrichtung S zwischen zwei Säulen 36 der Antriebsanordnung. Die Traverse 35 bildet einen entlang dieser Säulen 36 antreibbar verschiebbar gelagerten weiteren Schlitten. Die beiden Säulen 36 sind an ihren jeweiligen Enden über Verbindungselemente 37 miteinander verbunden, wodurch ein stabiler Antriebsrahmen gebildet ist.

An dem ersten Schlitten 34 ist die Transportvorrichtung 32 angeordnet und kann somit entlang der Quertraverse 35 sowie gemeinsam mit der Quertraverse 35 entlang der Säulen 36 bewegt werden. Die Transportvorrichtung 32 hat ein beispielsgemäß plattenförmiges Trägerteil 38, an dem der erste Schlitten 34 befestigt ist. Das Trägerteil 38 bildet beispielsgemäß eine Decke der Transportvorrichtung 32, der ein Transportboden 39 in Höhenrichtung H mit Abstand gegenüberliegt. Das Trägerteil 38 und der Transportboden 39 sind miteinander verbunden, beispielsweise durch stab- und/oder plattenförmige Elemente. Beim Ausführungsbeispiel ist eine mit einer Durchbrechung für die Traverse 35 versehene Seitenwand 40 zwischen dem Trägerteil 38 und dem Transportboden 39 vorhanden, wobei gegenüberliegend zu dieser Seitenwand 40 zwei Verbindungsstäbe 41 zur Verbindung des Trägerteils 38 mit dem Transportboden 39 vorhanden sind. Das Trägerteil 38, die Seitenwand 40 und die Verbindungsstäbe 41 sowie der Transportboden 39 bilden ein Transportgehäuse.

Der Transportboden 39 enthält bewegbare und beispielsgemäß in Tiefenrichtung T verschiebbar angeordnete Transportbodenteile 45. Bei dem hier beschriebenen Ausführungsbeispiel sind vier bewegbare Transportbodenteile 45 vorhanden. Jedes Transportbodenteil 45 hat eine plattenförmige Gestalt.

Der Transportboden 39 weist eine Bodenführungseinrichtung 46 auf, die beim Ausführungsbeispiel durch zwei parallel verlaufende Bodenführungsschienen 47 gebildet ist. Die beiden Bodenführungsschienen 47 erstrecken sich in Tiefenrichtung T mit Abstand zueinander und weisen jeweils eine Führungsnut 48 auf, die zur jeweils anderen Bodenführungsschiene 47 hin offen ist und die sich beispielsgemäß gegenüberliegen. Jedes Transportbodenteil 45 hat an in Seitenrichtung S gegenüberliegenden Seiten jeweils einen Führungsvorsprung 49, dessen Querschnitt im Wesentlichen mit dem Querschnitt der Bodenführungsnut 48 übereinstimmt und der in die zugeordnete Bodenführungsnut 48 eingreift. Dadurch sind die Transportbodenteile 45 in Tiefenrichtung T entlang den Bodenführungsschienen 47 geführt bewegbar gelagert.

Die beiden Führungsschienen 47 sind auf einer dem Warenregal 21 abgewandten ersten Seite 50 der Transportvorrichtung 32 fest miteinander verbunden, beispielsgemäß mittels eines feststehenden Bodenelements 51. Das feststehende Bodenelement 51 dient außerdem als Anschlag für das unmittelbar benachbarte Transportbodenteil 45. Auf ersten Seite 50 können die Transportbodenteile 45 nicht aus der Transportvorrichtung 32 entnommen werden.

Auf der der ersten Seite 50 entgegengesetzten zweiten Seite 52, die dem Warenregal 21 zugewandt bzw. zugeordnet ist, ist die Bodenführungseinrichtung 46 derart ausgebildet, dass die Transportbodenteile 45 eingesetzt bzw. entnommen werden können. Beispielsgemäß sind die Bodenführungsschienen 47 hierfür auf der zweiten Seite 52 offen. Das unmittelbar an der zweiten Seite 52 vorhandene Transportbodenteil 45 bildet das vorderste Transportbodenteil.

Die Abmessung der Transportbodenteile 45 in Tiefenrichtung T kann für sämtliche Transportbodenteile 45 gleich groß sein und entspricht vorzugsweise dem Rastermaß der Tiefe der Fächer 29. Das vorderste Transportbodenteil kann - wie beim Ausführungsbeispiel - in Tiefenrichtung T größer sein als die anderen Transportbodenteile 45 und größer als das Rastermaß. Somit kann jedem Fach 29 eines in der Transportvorrichtung 32 transportierten Facheinschubs 25 wenigstens ein Transportbodenteil 45 zugeordnet sein. Sind sämtliche Zwischenwände 28 in einem Facheinschub 25 vorhanden, ist die Tiefe der jeweiligen Fächer 29 minimal und jedem Fach 29 ist genau ein Transportbodenteil 45 zugeordnet. Sind nicht sämtliche Zwischenwände 28 vorhanden und ist die Tiefe eines oder mehrerer Fächer 29 daher größer, sind diesem Fach entsprechend zwei oder mehr Transportbodenteile 45 zugeordnet.

Mittels der Antriebsanordnung 33 kann die Transportvorrichtung 32 zu einer Entladestelle an einer Entladestation 58 bewegt werden. Die Entladestation 58 ist neben oder am Warenregal 21 angeordnet und in Höhenrichtung H sowie in Seitenrichtung S feststehend ausgeführt. Die Entladestation ist dazu eingerichtet, eine oder mehrere Transportbodenteile 45 derart zu bewegen, dass ein oder mehrere Fächer 29 des auf dem Transportboden 39 befindlichen Facheinschubs 25 nach unten geöffnet werden, so dass eine in dem Fach 29 angeordnete Wareneinheit W herausfällt. Hierzu weist die Entladestation 58 beim Ausführungsbeispiel ein Bodenbedienteil 59 auf, das an einem oder mehreren Transportbodenteilen 45 eingreifen kann. Das Bodenbedienteil 59 ist beim Ausführungsbeispiel durch einen Entladeantrieb 60 bewegbar. Der Entladeantrieb 60 ist beispielsweise derart ausgeführt, dass er das Bodenbedienteil 59 ausschließlich in einem Freiheitsgrad, nämlich translatorisch in Tiefenrichtung T bewegen kann.

Wie es in den Zeichnungen zu erkennen ist, ist das Bodenbedienteil 59 beim Ausführungsbeispiel als Bedienplatte 61 ausgeführt. An der Unterseite der Bedienplatte 61 ist ein Abtriebselement 62, beispielsgemäß eine Zahnstange 63 befestigt. Die Zahnstange 63 erstreckt sich in Tiefenrichtung T. Der Entladeantrieb 60 weist ein Antriebsteil 64 und beispielsgemäß ein Zahnrad 65 auf. Das Zahnrad 65 ist in Eingriff mit der Zahnstange 63. Ein Motor 66 des Entladeantriebs 60 ist mit dem Zahnrad 65 drehverbunden. Beim Antrieb des Zahnrades 65 durch den Motor 66 bewegt sich die Zahnstange 63 gemeinsam mit der Bedienplatte 61 in Tiefenrichtung T. Die Entladestation 58 hat zur verschiebbaren Lagerung der Bedienplatte 61 zwei in Seitenrichtung S mit Abstand zueinander angeordnete Führungsschienen 67, die die Bedienplatte 61 an jeweils einer Seitenkante umgreifen.

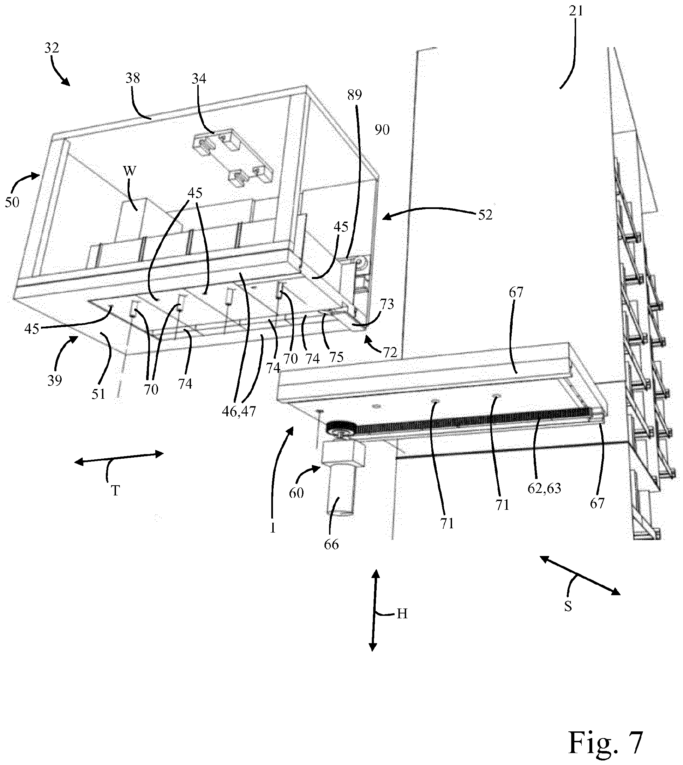

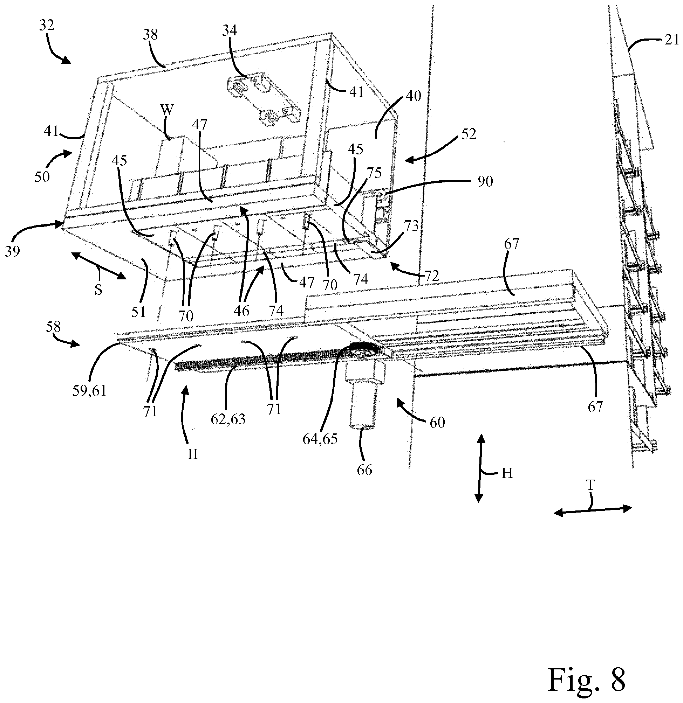

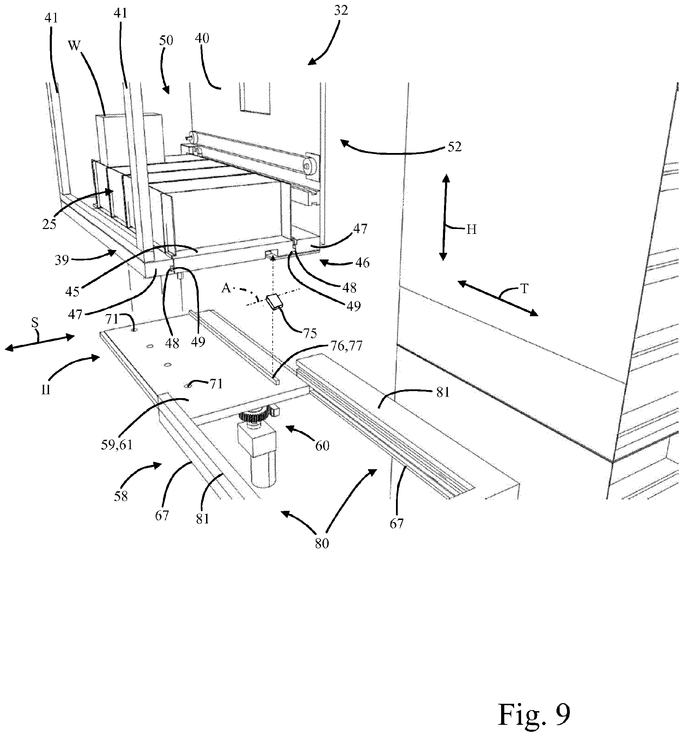

Mit Hilfe des Entladeantriebs 60 kann das Bodenbedienteil 59 und beispielsgemäß die Bedienplatte 61 zwischen einer eingefahrenen Stellung I (Figur 7) und einer teilweise oder vollständig ausgefahrenen Stellung II (z.B. Figuren 8 und 9) bewegt werden. In der eingefahrenen Stellung I befindet sich die Bedienplatte 61 zwischen den Führungsschienen 67 und ist in Tiefenrichtung T betrachtet mit Abstand zur Transportvorrichtung 32 angeordnet. In der ausgefahrenen Stellung II befindet sich die Bedienplatt 61 unterhalb einer oder mehrerer der Transportbodenteile 45.

Jedes Transportbodenteil 45 hat beispielsgemäß einen Bedienvorsprung 70, der von einer Unterseite des betreffenden Transportbodenteils 45 weg ragt. Bei dem hier beschriebenen Ausführungsbeispiel ist jeder Bedienvorsprung 70 durch einen zylindrischen Zapfen gebildet. Die Bedienvorsprünge 70 erstrecken sich beispielsgemäß in Höhenrichtung H.

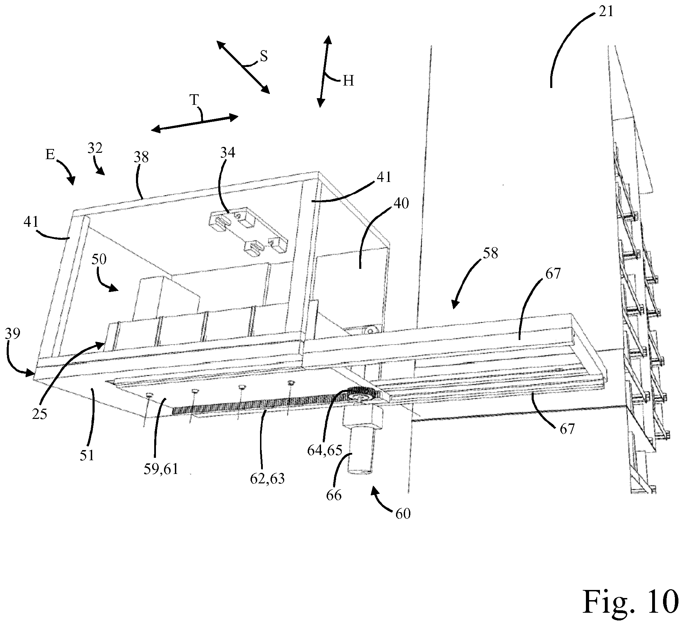

Das Bodenbedienteil 59 weist wenigstens eine Bedienaussparung 71 auf. Wenn sich die Transportvorrichtung 32 in einer Entladeposition E befindet (Figuren 10-12), greift das Bodenbedienteil 59 mit einer oder mehreren Bedienaussparungen 71 an einem oder mehreren zugeordneten Bedienvorsprüngen 70 an bzw. umgreift diese(n) zumindest teilweise. Durch Bewegen des Bedienteils 59 kann dann das betreffende Transportbodenteil 45 bewegt werden, um den Transportboden 39 unterhalb eines betreffenden Fachs 29 zu öffnen.

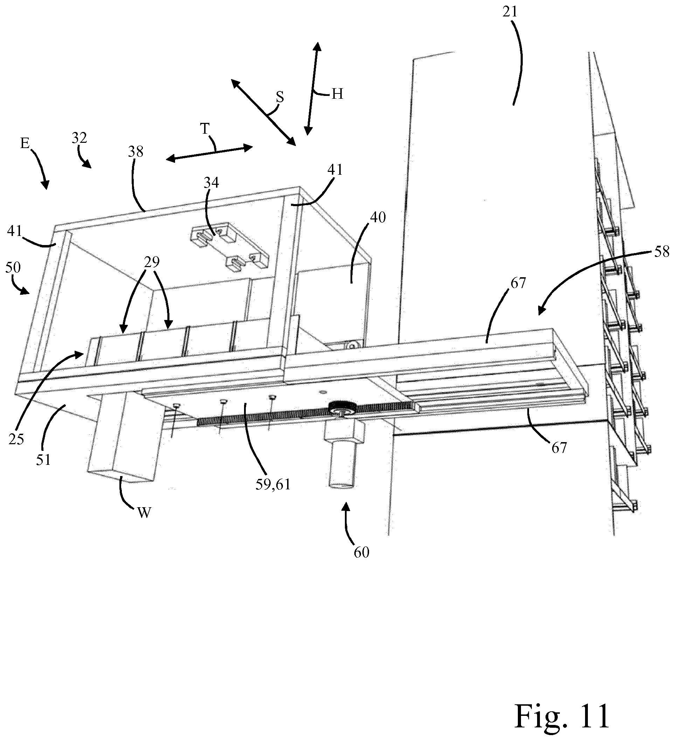

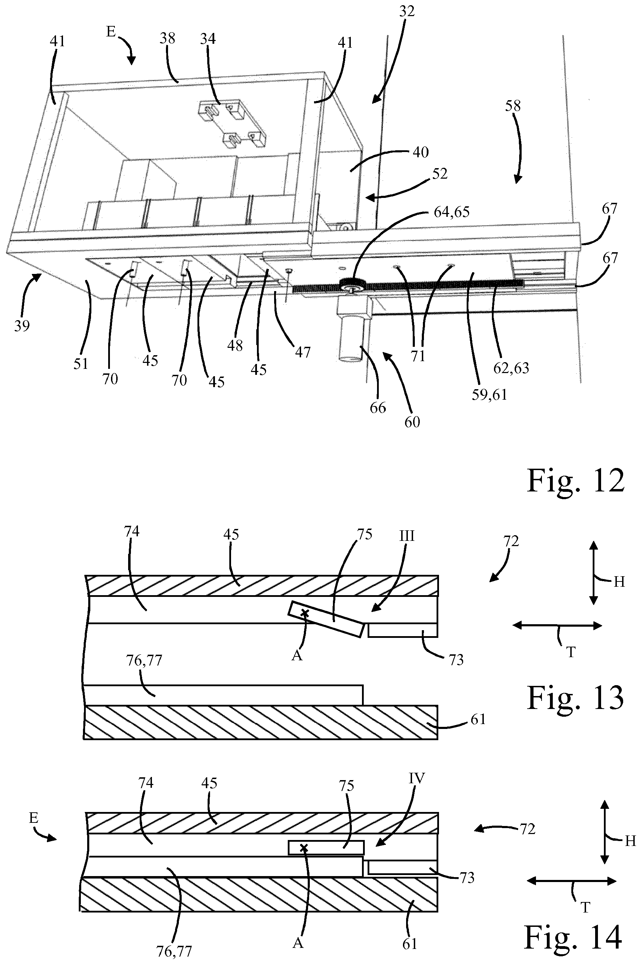

Bei dem hier beschriebenen Ausführungsbeispiel ist jedem der Bedienvorsprünge 70 jeweils eine Bedienaussparung 71 zugeordnet, die durch ein Loch in der Bedienplatte 61 gebildet ist. Die Abstände zwischen den Bedienaussparungen 71 entsprechen den Abständen zwischen den Bedienvorsprüngen 70 (in Tiefenrichtung T betrachtet). Abhängig davon, wie weit die Bedienplatte 61 ausgefahren wird, können einer oder mehrere Bedienvorsprünge 70 mit jeweils einer Bedienaussparung 71 in Höhenrichtung H fluchtend angeordnet werden. Wenn anschließend die Transportvorrichtung 32 mittels der Antriebsanordnung 33 in die Entladeposition E bewegt wird, ragen die betreffend fluchtend zu einer Bedienaussparung 71 angeordneten Bedienvorsprünge 70 in die zugeordnete Bedienaussparung 71 hinein. Anschließend kann über den Entladeantrieb 60 die Bedienplatte 61 ganz oder teilweise in Richtung der eingefahrenen Stellung I bewegt werden, wodurch sich die Transportbodenteile 45 gemeinsam mit der Bedienplatte 61 bewegen, deren Bedienvorsprünge 70 in einer Bedienaussparung 71 hineinragen. In den Figuren 10 und 11 ist ein Beispiel veranschaulicht, bei dem sämtliche Bedienvorsprünge 70 in jeweils einer Bedienaussparung 71 eingreifen, während beim Beispiel gemäß Figur 12 nur die Bedienvorsprünge 70 der ersten beiden Transportbodenteile 45 in jeweils einer Bedienaussparung 70 eingreifen, so dass zwei der benachbart zum feststehenden Bodenelement 51 angeordnete Transportbodenplatten 45 beim Betätigen des Entladeantriebs 60 nicht bewegt werden und die darüber angeordneten Fächern 29 des Facheinschubs 25 nach unten verschließen.

Um ein versehentliches Verschieben der Transportbodenteile 45 zu vermeiden, ist auf der dem Warenregal 21 zugeordneten Seite 52 der Transportvorrichtung 32 eine Sicherungseinrichtung 72 vorhanden. Die Sicherungseinrichtung 72 hat einen feststehenden Anschlag 73, der beispielsgemäß an einer der Bodenführungsschienen 47 angeordnet ist und unter das benachbarten Transportbodenteil 45 vorsteht. Sämtliche Transportbodenteile 45 haben eine Durchgangsnut 74, wobei sich die Durchgangsnuten 74 in Tiefenrichtung T erstrecken und zueinander fluchtend angeordnet sind. Die Durchgangsnuten 74 durchsetzen das jeweilige Transportbodenteil 45 in Tiefenrichtung T vollständig. Der Sicherungsanschlag 73 ragt mit seinem freien Ende unter die nach unten offene Durchgangsnut 74 des benachbarten vordersten Transportbodenteils. Die Durchgangsnuten 74 sind jeweils zur Unterseite des betreffenden Transportbodenteils 45 offen.

Am vordersten Transportbodenteil 45, das auf der dem Warenregal 21 zugewandten Seite 52 der Transportvorrichtung 32 angeordnet ist, befindet sich in Tiefenrichtung T benachbart zu dem Sicherungsanschlag 73 ein schwenkbar gelagertes Sicherungsteil 75. Das Sicherungsteil 75 ist innerhalb der Durchgangsnut 74 des betreffenden Transportbodenteils 45 um eine Schwenkachse A schwenkbar angeordnet und ragt aus der Durchgangsnut 74 heraus. Die Anordnung des Sicherungsteils 75 ist nach Art einer Explosionsdarstellung in Figur 9 schematisch veranschaulicht.

Den fluchtenden Durchgangsnuten 74 ist auf der Oberseite der Bedienplatte 61 ein durch eine Entriegelungsleiste 76 gebildetes Sicherungsbedienelement 77 zugeordnet. Wenn die Transportvorrichtung 32 in die Entladeposition E bewegt wurde, greift die Entriegelungsleiste 76 in die Durchgangsnuten 74 ein und beaufschlagt das Sicherungsteil 75. In der Entladeposition E befindet sich der Sicherungsanschlag 73 in Tiefenrichtung T benachbart zur Sicherungsleiste 76.

Die Funktionsweise der Sicherungseinrichtung 72 ist in den Figuren 13 und 14 schematisch veranschaulicht. Das Sicherungsteil 75 ragt in einer Sicherungsstellung III unten aus der Durchgangsnut 74 des Transportbodenteils 45 heraus und liegt am Sicherungsanschlag 73 an bzw. diesem mit geringem Abstand in Tiefenrichtung T gegenüber. Die Sicherungsstellung III kann beispielsweise dadurch eingenommen werden, dass das Sicherungsteil 75 an dem dem Sicherungsanschlag 73 entgegengesetzten Endbereich schwenkbar um die Schwenkachse A gelagert wird, so dass es durch die Schwerkraft um die Schwenkachse A nach unten klappt, bis es auf der dem Sicherungsanschlag 73 entgegengesetzten Seite am Nutgrund der Durchgangsnut 74 anliegt. Diese Sicherungsstellung III ist in Figur 13 veranschaulicht.

Durch das Bewegen der Transportvorrichtung 32 in die Entladeposition E, beaufschlagt das durch die Entriegelungsleiste 76 gebildete Sicherungsbedienelement 77 das Sicherungsteil 75 und schwenkt dieses um die Schwenkachse A in die Durchgangsnut 74 zurück. Die Sicherungsleiste 76 ist in der Entladeposition E unterhalb des Sicherungsteils 75 und in Tiefenrichtung T benachbart zum Sicherungsanschlag 73 angeordnet (Figur 14). Das Sicherungsteil 75 nimmt eine Freigabestellung IV ein, in der ein Verschieben des betreffenden vordersten Transportbodenteils und somit auch der anderen Transportbodenteile 45 in Tiefenrichtung T über den Sicherungsanschlag 73 hinweg ermöglicht ist.

Somit wird die Sicherungseinrichtung 72 von einer Sicherungsstellung III automatisch in eine Freigabestellung IV umgeschaltet, sobald die Transportvorrichtung 32 die Entladeposition E erreicht hat. Außerhalb der Entladeposition E sperrt die Sicherungseinrichtung 72 ein Verschieben der Transportbodenteile 45 in Tiefenrichtung T. Ein versehentliches Öffnen des Transportbodens T außerhalb der Entladeposition E ist dadurch verhindert.

In Abwandlung zum veranschaulichten Ausführungsbeispiel kann das Sicherungsteil 75 auch durch ein federelastisches Element oder dergleichen in die Sicherungsstellung III vorgespannt und entgegen der Vorspannkraft in die Freigabestellung IV bewegt werden.

Die Entladestation 58 weist eine Abstützeinrichtung 80 auf, die dazu eingerichtet ist, ein aus den Bodenführungsschienen 47 der Transportvorrichtung 32 an der Entladestation 58 entnommenes Transportbodenteil 45 abzustützen. Zu der Abstützeinrichtung 80 gehören beispielsgemäß zwei Abstützschienen 81, die analog zu den Bodenführungsschienen 47 der Transportvorrichtung 32 ausgebildet sein können. Die Abstützschienen 81 weisen jeweils eine Führungsnut auf, die einer jeweiligen Bodenführungsnut 48 der Bodenführungsschienen 47 entspricht. In der Entladeposition E der Transportvorrichtung 32 sind die Bodenführungsnuten 48 fluchtend mit den Führungsnuten in den Abstützschienen 81 ausgerichtet, so dass ein oder mehrere Transportbodenteile 45 von der Transportvorrichtung 32 entnommen und entlang der Abstützschienen 81 in die Entladestation 58 verschoben werden können. Alternativ oder zusätzlich können sich die Transportbodenteile 45 auch auf der Bedienplatte 61 abstützen. Bei einem abgewandelten Ausführungsbeispiel könnten die Abstützschienen 81 daher auch entfallen.

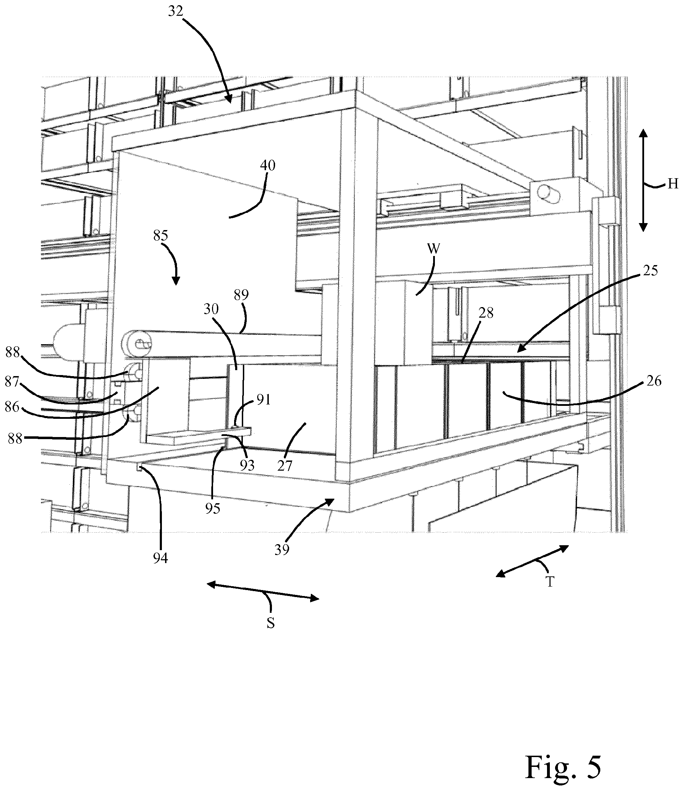

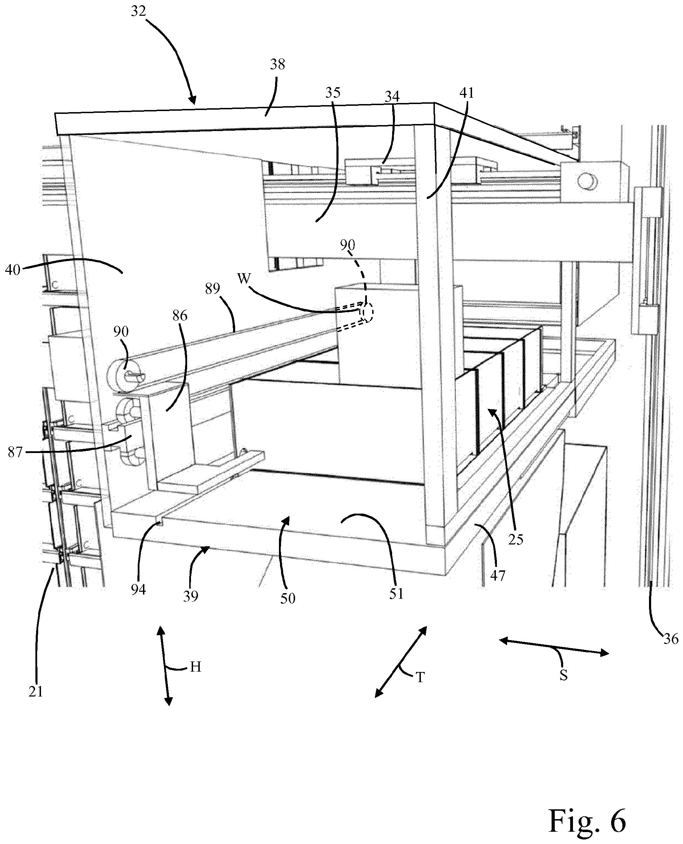

In den Figuren 5 und 6 ist ein Ausführungsbeispiel einer Fachbedieneinrichtung 85 veranschaulicht, die zu der Transportvorrichtung 32 gehört. Die Fachbedieneinrichtung 85 ist dazu eingerichtet, einen Facheinschub 25 aus einem Regalfach 22 des Warenregals 21 heraus auf den Transportboden 39 sowie einen auf dem Transportboden 39 angeordneten Facheinschub 25 in ein Regalfach 22 zu bewegen. Die Bewegung hierzu erfolgt ausschließlich in einem Freiheitsgrad, nämlich translatorisch in Tiefenrichtung T.

Zu der Fachbedieneinrichtung 85 gehört beispielsgemäß ein Bedienschlitten 86, der entlang einer Schlittenführungsschiene 87 geführt bewegbar gelagert ist, beispielsweise über mehrere Rollen 88. Parallel zu der Schlittenführungsschiene 87 erstreckt sich mit Abstand hierzu ein flexibles Zugelement 89, das an einer Stelle mit dem Bedienschlitten 86 fest verbunden ist. Das Zugelement 89 ist um zwei Führungsrollen 90 herumgeführt. Wenigstens einer der beiden Führungsrollen 90 ist motorisch antreibbar, so dass sich der Bedienschlitten 86 gemeinsam mit dem Zugelement 89 bewegen kann.

An dem Bedienschlitten 86 ist ein Fachbedienelement 91 angeordnet, das beim Ausführungsbeispiel in eine Seitenrichtung S zu einem freien Ende hin weg ragt. Das Fachbedienelement 91 kann durch einen zylindrischen Stift oder dergleichen gebildet sein. Das Fachbedienelement 91 arbeitet mit einer Fachbedienaussparung 92 am Facheinschub 25 zusammen, die beispielsgemäß in einem der Wandendbereiche 30 ausgebildet ist und diesen Wandendbereich 30 in Seitenrichtung S vollständig durchsetzt. Die Fachbedienaussparung 92 kann ein zylindrisches Loch sein.

Das Fachbedienelement 91 ist an einem freien Ende eines Arms 93 angeordnet, der vom Bedienschlitten 86 in Tiefenrichtung T wegragt. Wenn der Bedienschlitten 86 auf die dem Warenregal 21 zugewandten zweiten Seite 52 der Transportvorrichtung 32 bewegt wird, ragt der Arm 93 aus der Transportvorrichtung 32 heraus und kann in ein Regalfach 22 des Wagenregals 21 hineinragen. Über die Antriebsanordnung 33 kann die Transportvorrichtung 32 in Seitenrichtung S bewegt werden, so dass das Fachbedienelement 91 in die Fachbedienaussparung 92 am Facheinschub 25 eingreift. Wenn anschließend der Bedienschlitten 86 in Tiefenrichtung T bewegt wird, bewegt sich der betreffende Facheinschub 25 gemeinsam mit dem Bedienschlitten 86. Das freie Ende des Arms 93 sowie das Fachbedienelement 91 sind in Figur 4 beispielhaft skizziert veranschaulicht.

Beim Ausführungsbeispiel greift die Fachbedieneinrichtung 85 mit dem Fachbedienelement 91 an einer einzigen Stelle außerhalb des Zentrums am Facheinschub 25 an. Um eine im Wesentlichen geradlinige Bewegung in Tiefenrichtung T zu erzielen, ist der Facheinschub 25 innerhalb des Regalfachs 22 und/oder innerhalb der Transportvorrichtung 32 in Tiefenrichtung T geführt. Hierzu dienen beispielsgemäß entsprechende Führungsschienen, die sich in Tiefenrichtung T erstrecken. Beim Ausführungsbeispiel ist in die Oberseite einer der beiden Bodenführungsschienen 47 eine nach oben offene Bodennut 94 eingebracht, in die eine nach unten weisende Führungskante des Facheinschubs 25 eingreift. Die Führungskante 95 des Facheinschubs 25 kann durch den unteren Randbereich einer der beiden Längswände 26 des Facheinschubs 25 gebildet sein.

Dieser untere Randbereich, der die Führungskante 95 bildet, kann aus der sonstigen Erstreckungsebene der Längswand 26 heraus abgekröpft sein. Der Abstand der abgekröpften Führungskanten 95 in Seitenrichtung S ist dadurch größer als die Breite B der Fächer dieses Facheinschubs 25. Mit den Führungskanten 95 kann sich der Facheinschub auf den nicht beweglichen Teilen des Transportbodens abstützen, beispielsgemäß auf den Bodenführungsschienen 47. Dadurch lassen sich die Transportbodenteile 45 ungehindert verschieben. Die Position und Ausrichtung des Facheinschubs auf dem Transportboden 39 wird durch die Bodennut 94 vorgegeben.

Zur Entnahme einer Wareneinheit W arbeitet die Regalbedienvorrichtung 20 wie folgt:

Über die Antriebsanordnung 33 wird die Transportvorrichtung 32 unmittelbar vor dem betreffenden Regalfach 22 positioniert, aus dem der Facheinschub 25 mit der gewünschten Wareneinheit W entnommen werden soll. Das Fachbedienelement 91 wird mittels der Fachbedieneinrichtung 85 und beispielsgemäß des Bedienschlittens 86 auf der dem Warenregal 21 zugeordneten zweiten Seite 52 positioniert, so dass es in das betreffende Regalfach 22 hineinragt und sich in Tiefenrichtung T auf Höhe der Fachbedienaussparung 92 des Facheinschubs 25 befindet. Mittels der Antriebsanordnung 33 wird die Transportvorrichtung 32 so positioniert, dass das Fachbedienelement 91 mit der Fachbedienaussparung 92 fluchtet und anschließend in Seitenrichtung S bewegt, bis das Fachbedienelement 91 in die Fachbedienaussparung 92 eingreift. Anschließend wird die Fachbedieneinrichtung 85 betätigt und der Facheinschub 25 aus dem Regalfach 22 heraus auf den Transportboden 39 der Transportvorrichtung 32 gezogen. Beim Ausführungsbeispiel geschieht dies durch Bewegen des Bedienschlittens 86 in Tiefenrichtung T vom Regalfach 22 weg. Dabei wird der Facheinschub 25 beispielsgemäß durch die Führungskante 95 entlang der Bodennut 94 im Transportboden 39 geführt und bleibt dadurch in Tiefenrichtung T ausgerichtet.

Sobald sich der Facheinschub 25 in der Transportvorrichtung 32 befindet, bewegt die Antriebsanordnung 33 die Transportvorrichtung 32 zur Entladestation 58 hin. Die Entladestation 58 kann gleichzeitig das Bodenbedienteil 59 und beispielsgemäß die Bedienplatte 61 in eine ausgefahrene Stellung II bewegen, wobei die Stellung davon abhängt, welches der Fächer 29 des Facheinschubs 25 geöffnet werden soll. Wie es beispielhaft in den Figuren 8 und 9 veranschaulicht ist, sei angenommen, dass die Bedienplatte 61 vollständig ausgefahren wird. Anschließend kann die Transportvorrichtung 32 in die Entladeposition E bewegt werden, wobei sie zunächst unmittelbar oberhalb der Bedienplatte 61 positioniert wird, so dass die Bedienvorsprünge 70 mit den Bedienaussparungen 71 in Höhenrichtung H fluchten.

Im Anschluss daran wird die Transportvorrichtung 32 in Höhenrichtung H nach unten auf die Bedienplatte 61 bewegt und die Bedienvorsprünge 70 greifen in die Bedienaussparungen 71 ein (Figur 10). Schließlich kann über den Entladeantrieb 60 die Bedienplatte 61 in Tiefenrichtung T zumindest teilweise aus der ausgefahrenen Stellung I in Richtung zur eingefahrenen Stellung II bewegt werden, wodurch sich der Transportboden 39 unterhalb eines oder mehrerer Fächer 29 öffnet, da die Transportbodenteile 45 gemeinsam mit der Bedienplatte 61 bewegt werden. Eine Wareneinheit W, die sich oberhalb der Öffnungen im Transportboden 29 befindet, fällt dann heraus, z.B. in ein Ausgabefach oder in einen Ausgabeschacht (Figur 11).

Soll beispielsweise nur eines der mittleren Fächer 29 des Facheinschubs 25 geöffnet werden, kann die Bedienplatte 61 auch lediglich teilweise ausgefahren werden, so dass nur ein oder mehrere, jedoch nicht alle Bedienvorsprünge 70 in zugeordnete Bedienaussparungen 71 der Bedienplatte 61 eingreifen, wie es beispielsweise in Figur 12 veranschaulicht ist. Beim Betätigen der Bedienplatte 61 werden dann nur die Transportbodenteile 45 verschoben, deren Bedienvorsprünge 70 in die Bedienaussparungen 71 eingreifen. Über den Weg, den die Bedienplatte 61 bewegt wird, kann auf diese Weise lediglich ein Fach 29 oder einige der vorhandenen Fächer 29 nach unten geöffnet werden, so dass die betreffenden Wareneinheiten W herausfallen können.

Somit ist es mittels der erfindungsgemäßen Regalbedienvorrichtung 20 möglich, jedes beliebige Fach 29 oder mehrere benachbarte Fächer 29 zur Entnahme der jeweiligen Wareneinheiten W zu öffnen.

Nach dem Herausnehmen der gewünschten Wareneinheiten W an der Entladestation 58 können die Transportbodenteile 45 wieder zurück in die Transportvorrichtung 32 bzw. in die Bodenführungsschienen 47 bewegt werden. Anschließend kann die Antriebsanordnung 33 die Transportvorrichtung 32 in Höhenrichtung H bewegen, so dass die Bedienvorsprünge 70 außer Eingriff mit den Bedienaussparungen 71 gelangen. Die Transportvorrichtung 32 kann wieder vor dem Regalfach 22 positioniert und der Facheinschub 25 mit Hilfe der Fachbedieneinrichtung 85 vom Transportboden 39 in das Regalfach 22 eingeschoben werden. Nach dem Einschieben wird das Fachbedienelement 91 durch Bewegen der Transportvorrichtung 32 in Seitenrichtung S außer Eingriff mit der Fachbedienaussparung 92 gebracht und das Fachbedienelement 91 und der Arm 93 werden in die Transportvorrichtung 32 zurückbewegt. Die Transportvorrichtung 32 ist dann wieder aufnahmebereit für einen weiteren Facheinschub 25.

Die Regalbedienvorrichtung 20 kann über eine Steuereinrichtung gesteuert werden. In der Steuereinrichtung ist hinterlegt, welche Wareneinheiten W sich in welchem Fach 29 befinden. Bei einer Anforderung einer Wareneinheit W kann die Steuereinrichtung daher die Regalbedienvorrichtung 20 derart ansteuern, dass die korrekte Wareneinheit W entnommen und an der Entladestation 58 entladen wird.

Durch das Öffnen eines jeweiligen Faches 29 an der Entladestation 58 ist es im Prinzip unerheblich, wie groß eine Wareneinheit W ist und wie genau deren Verpackung aussieht. Solange sie in einem Fach 29 aufgenommen werden kann, kann sie im betreffenden Fach angeordnet und gehandhabt werden. Eine Wareneinheit W kann aus einer einzigen Packung oder aus mehreren einzelnen Packungen zusammengesetzt sein. Die genaue Größe muss nicht bekannt sein, da die Abmessungen der Fächer 29 in der Steuereinrichtung bekannt und hinterlegt sind.

Wenn sich die Fachgrößen ändern oder andere Wareneinheiten in bestimmten Fächern angeordnet werden, wird dies in der Steuereinrichtung entsprechend abgelegt. Dies kann durch bekannte Maßnahmen, wie etwa Barcodes an den Wareneinheiten W und/oder den Fächern 29 durchgeführt werden, die über eine entsprechende Scaneinrichtung erfasst und die zugehörigen Informationen und die Steuereinrichtung übertragen werden können.

Als Wareneinheit W können beispielsweise Medikamente, Drogerieartikel oder dergleichen in einem Warenregal 21 gelagert und zur Entladestelle bzw. einem Ausgabefach transportiert werden.

Die Erfindung betrifft eine Regalbedienvorrichtung 20 mit einem Warenregal 21, das mehrere Regalfächer 22 aufweist, wobei sich in jedem Regalfach 22 ein Facheinschub 25 mit einem oder mehreren Fächern 29 befindet. Die Fächer 29 sind in einer Höhenrichtung H nach oben und unten offen. Eine Antriebsanordnung 33 dient zum Bewegen einer Transportvorrichtung 32 entlang einer Vorderseite 34 des Warenregals 21 und kann die Transportvorrichtung 32 vor einem Regalfach 22 positionieren, um den Facheinschub 25 aus dem Regalfach 22 auf einen Transportboden 39 der Transportvorrichtung 32 zu bewegen. An einer Entladestation 58 kann der Transportboden 39 unterhalb des wenigstens einen Faches 29 des Facheinschubs 25 geöffnet werden, so dass eine in dem Fach 29 angeordnete Wareneinheit W durch die Öffnung im Transportboden 39 nach unten in einen Ausgabeschacht oder in ein Ausgabefach fällt. Der Transportboden 39 ist hierfür mittels mehrerer Transportbodenteile 45 unterteilt, die einzeln bewegt werden können. Hierzu ist an der Entladestation 58 ein Bodenbedienteil 59 vorhanden, das über einen Entladeantrieb 60 betätigt wird.

### Bezugszeichenliste:

- 20: Regalbedienvorrichtung
- 21: Warenregal
- 22: Regalfach
- 23: Vorderseite des Warenregals
- 24: Rückseite des Warenregals
- 25: Facheinschub
- 26: Längswand
- 27: Querwand
- 28: Zwischenwand
- 29: Fach
- 30: Wandendbereich
- 31: Fachbedieneinrichtung
- 32: Transportvorrichtung
- 33: Antriebsanordnung
- 34: erster Schlitten
- 35: Traverse
- 36: Säule
- 37: Verbindungselement
- 38: Trägerteil
- 39: Transportboden
- 40: Seitenwand der Transportvorrichtung
- 41: Verbindungsstab

- 45: Transportbodenteil
- 46: Bodenführungseinrichtung
- 47: Bodenführungsschiene
- 48: Bodenführungsnut
- 49: Führungsvorsprung
- 50: vom Warenregal abgewandte Seite der Transportvorrichtung
- 51: feststehendes Bodenelement

- 52: dem Warenregal zugewandte Seite der Transportvorrichtung

- 58: Entladestation
- 59: Bodenbedienteil
- 60: Entladeantrieb
- 61: Bedienplatte
- 62: Abtriebselement
- 63: Zahnstange
- 64: Antriebselement
- 65: Zahnrad
- 66: Motor des Entladeantriebs
- 67: Führungsschiene der Entladestation

- 70: Bedienvorsprung
- 71: Bedienaussparung
- 72: Sicherungseinrichtung
- 73: Sicherungsanschlag
- 74: Durchgangsnut
- 75: Sicherungsteil
- 76: Entriegelungsleiste
- 77: Sicherungsbedienelement

- 80: Abstützeinrichtung
- 81: Abstützschiene

- 85: Fachbedieneinrichtung
- 86: Bedienschlitten
- 87: Schlittenführungsschiene
- 88: Rolle
- 89: Zugelement
- 90: Führungsrolle
- 91: Fachbedienelement
- 92: Fachbedienaussparung
- 93: Arm
- 94: Bodennut
- 95: Führungskante

- I: eingefahrene Stellung des Bodenbedienteils
- II: ausgefahrene Stellung des Bodenbedienteils
- III: Sicherungsstellung
- IV: Freigabestellung

- A: Schwenkachse
- b: Breite eines Facheinschubs
- E: Entladeposition
- H: Höhenrichtung
- S: Seitenrichtung
- T: Tiefenrichtung
- W: Wareneinheit

## Patentansprüche

1. Regalbedienvorrichtung (20)
mit einem Warenregal (21), das mehrere Regalfächer (22) aufweist, die dazu eingerichtet sind, jeweils einen Facheinschub (25) mit wenigstens einem nach unten offenen Fach (29) für jeweils eine Wareneinheit (W) aufzunehmen,
mit einer Transportvorrichtung (32), die mittels einer Antriebsanordnung (33) in wenigstens zwei Raumrichtungen (H, S) bewegbar ist,
wobei die Transportvorrichtung (32) zur Entnahme eines Facheinschubs (25) aus einem Regalfach (22) eingerichtet ist, und die einen Transportboden (39) aufweist, der zum Anordnen eines entnommenen Facheinschubs (25) eingerichtet ist, wobei der Transportboden (39) mehrere separat bewegbare Transportbodenteile (45) aufweist,
mit einer Entladestation (58), die dazu eingerichtet ist, ein oder mehrere Transportbodenteile (45) zu bewegen, um den Transportboden (39) der Transportvorrichtung (32) unterhalb des wenigstens einen Faches (49) eines in der Transportvorrichtung (32) vorhandenen Facheinschubs (25) wahlweise ganz oder teilweise zu öffnen.

2. Regalbedienvorrichtung nach Anspruch 1,
**dadurch gekennzeichnet, dass** die Entladestation (58) an einer beim Betrieb unveränderlichen Entladestelle neben oder am Warenregal (21) angeordnet ist.

3. Regalbedienvorrichtung nach Anspruch 1 oder 2,
**dadurch gekennzeichnet, dass** der Facheinschub (25) in einer Tiefenrichtung (T) durch wenigstens eine Zwischenwand (28) in einzelne Fächer (49) unterteilbar ist, wobei die Tiefe eines Fachs (49) der Abmessung eines Transportbodenteils (45) in Tiefenrichtung (T) oder ein ganzzahliges Vielfaches davon ist.

4. Regalbedienvorrichtung nach einem der vorhergehenden Ansprüche,
**dadurch gekennzeichnet, dass** die Transportbodenteile (45) mittels einer an der Transportvorrichtung (32) vorhandenen Bodenführungseinrichtung (46) in einer Tiefenrichtung (T) verschiebbar gelagert sind und sich in Tiefenrichtung (T) unmittelbar aneinander anschließen.

5. Regalbedienvorrichtung nach Anspruch 4,
**dadurch gekennzeichnet, dass** die Bodenführungseinrichtung (47) zwei parallele Bodenführungsschienen (47) aufweist, die an einer dem Warenregal (21) abgewandten Seite (50) der Transportvorrichtung (32) mittels eines feststehenden Bodenelements (51) verbunden sind, das einen feststehenden Anschlag für die beweglichen Transportbodenteile (45) bildet.

6. Regalbedienvorrichtung nach Anspruch 4 oder 5,
**dadurch gekennzeichnet, dass** die Bodenführungseinrichtung (46) auf einer dem Warenregal (21) zugewandten Seite (52) der Transportvorrichtung (32) zum Einführen und Herausnehmen von eines oder mehrerer Transportbodenteile (45) eingerichtet ist.

7. Regalbedienvorrichtung nach Anspruch 6,
**dadurch gekennzeichnet, dass** auf einer dem Warenregal (21) zugewandten Seite (52) der Transportvorrichtung (32) eine Sicherungseinrichtung (72) vorhanden ist, die zwischen einer das Herausnehmen eines oder mehrerer Transportbodenteile (45) verhindernden Sicherungsstellung (III) und einer das Herausnehmen eines oder mehrerer Transportbodenteile (45) ermöglichenden Freigabestellung (IV) bewegbar ist.

8. Regalbedienvorrichtung nach einem der Ansprüche 4 bis 7,
**dadurch gekennzeichnet, dass** die Entladestation (58) ein Sicherungsbedienelement (77) aufweist, das dazu eingerichtet ist die Sicherungseinrichtung (72) in die Freigabestellung (IV) zu bewegen.

9. Regalbedienvorrichtung nach einem der Ansprüche 4 bis 8,
**dadurch gekennzeichnet, dass** die Entladestation (58) ein mittels eines Entladeantriebs (60) bewegbares Bodenbedienteil (59) aufweist, das dazu eingerichtet ist, an wenigstens einem der Transportbodenteile (45) anzugreifen und das wenigstens eine Transportbodenteil (45) in Tiefenrichtung (T) zu verschieben.

10. Regalbedienvorrichtung nach Anspruch 9,
**dadurch gekennzeichnet, dass** jedes Transportbodenteil (45) einen rechtwinkelig oder schräg zu der Tiefenrichtung (T) weg ragenden Bedienvorsprung (70) aufweist und das Bodenbedienteil (59) wenigstens eine Bedienaussparung (71) aufweist, die dazu eingerichtet ist, den Bedienvorsprung (70) zum Bewegen des zugeordneten Transportbodenteils (45) zumindest teilweise zu umgreifen.

11. Regalbedienvorrichtung nach Anspruch 10,
**dadurch gekennzeichnet, dass** das Bodenbedienteil (59) als Bedienplatte (61) ausgeführt ist, in der für alle Bedienvorsprünge (70) der Transportbodenteile (45) jeweils eine Bedienaussparung (71) vorhanden ist.

12. Regalbedienvorrichtung nach einem der Ansprüche 4 bis 11,
**dadurch gekennzeichnet, dass** die Entladestation (58) eine Abstützeinrichtung (80) aufweist, die dazu eingerichtet ist, ein aus der Bodenführungseinrichtung (46) entnommenes Transportbodenteil (45) abzustützen.

13. Regalbedienvorrichtung nach einem der vorhergehenden Ansprüche,
**dadurch gekennzeichnet, dass** die Transportvorrichtung (32) eine Fachbedieneinrichtung (85) aufweist, die dazu eingerichtet ist einen Facheinschub (25) von dem Transportboden (39) in ein Regalfach (22) zu schieben oder zu ziehen und/oder einen Facheinschub (25) aus einem Regalfach (22) auf den Transportboden (39) zu schieben oder zu ziehen.

14. Regalbedienvorrichtung nach Anspruch 13,
**dadurch gekennzeichnet, dass** die Fachbedieneinrichtung (85) ein in einer Tiefenrichtung (T) bewegbares Fachbedienelement (91) aufweist, das mittels der Antriebsanordnung (33) in eine zugeordnete Fachbedienaussparung (92) eines Facheinschubs (25) einführbar ist.

15. Verfahren zum Entnehmen einer Wareneinheit (W) aus einem Warenregal (21), wobei das Warenregal (21) mehrere Regalfächer (22) aufweist, die dazu eingerichtet sind, jeweils einen Facheinschub (25) mit wenigstens einem nach unten offenen Fach (29) für jeweils eine Wareneinheit (W) aufzunehmen, wobei eine Transportvorrichtung (32) vorhanden ist, die mittels einer Antriebsanordnung (33) in wenigstens zwei Raumrichtungen (H, S) bewegbar ist, wobei die Transportvorrichtung (32) einen Transportboden (39) aufweist, der zum Anordnen eines entnommenen Facheinschubs (25) eingerichtet ist und mehrere separat bewegbare Transportbodenteile (45) aufweist, wobei eine Entladestation (58) vorhanden ist, die dazu eingerichtet ist, einen oder mehrere Transportbodenteile (45) zu bewegen, mit folgenden Schritten:
- Bewegen der Transportvorrichtung (32) in eine Position vor eines der Regalfächer (22) mittels der Antriebsanordnung (33),
- Entnehmen des Facheinschubs (25) aus dem Regalfach (22) und Anordnen des Facheinschubs (25) auf dem Transportboden (39) der Transportvorrichtung (32),
- Bewegen der Transportvorrichtung (32) in eine Entladeposition (E) an der Entladestation (58) mittels der Antriebsanordnung (33),
- Bewegen eines oder mehrerer Transportbodenteile (45) und wahlweise vollständiges oder teilweises Öffnen des Transportbodens (39) unterhalb des wenigstens einen Faches (29) des in der Transportvorrichtung (32) vorhandenen Facheinschubs (25), so dass die oberhalb der Öffnung im wenigstens einen Fach (29) angeordnete Wareneinheit (W) herausfällt.
